(19) Europäisches Patentamt
European Patent Office
Office européen des brevets

(11) **EP 2 966 498 A1**

(12) **EUROPEAN PATENT APPLICATION**

(43) Date of publication:
**13.01.2016 Bulletin 2016/02**

(51) Int Cl.:
***G02F 1/1343*** (2006.01)      *G02F 1/1337* (2006.01)

(21) Application number: **14183590.0**

(22) Date of filing: **04.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.07.2014 TW 103123526**

(71) Applicant: **InnoLux Corporation Miao-Li County 350 (TW)**

(72) Inventors:
• **Tsai, Tsung-Han**
  **350 Miao-Li County**
  **Taiwan (TW)**
• **Tseng, Yao-Teng**
  **350 Miao-Li County**
  **Taiwan (TW)**
• **Yang, Ching-Che**
  **350 Miao-Li County**
  **Taiwan (TW)**
• **Yen, Cheng-Pin**
  **350 Miao-Li County**
  **Taiwan (TW)**
• **Wang, An-Chang**
  **350 Miao-Li County**
  **Taiwan (TW)**

(74) Representative: **von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(54) **Display panel**

(57)    The present invention discloses a display panel and a display device. The display panel includes a first substrate, a second substrate and an electrode layer. The electrode layer is disposed on the first substrate and faces the second substrate, and includes a plurality of branch electrodes. The branch electrodes are disposed along a direction and spaced from each other by a first distance (T). When a light passes through the branch electrodes, a brightness distribution composed of a plurality of brightness textures and a plurality of dark textures is generated. The centers of the two adjacent bright textures are separated by a second distance (K). K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

EP 2 966 498 A1

FIG.2A

**Description**

**BACKGROUND OF THE INVENTION**

**Field of Invention**

The invention relates to a display panel and, in particular, to a display panel with higher transmittance.

**Related Art**

With the progress of technologies, flat display devices have been widely applied to various kinds of fields. Especially, liquid crystal display (LCD) devices, having advantages such as compact structure, low power consumption, less weight and less radiation, gradually take the place of cathode ray tube (CRT) display devices, and are widely applied to various electronic products, such as mobile phones, portable multimedia devices, notebooks, LCD TVs and LCD screens.

In the multi-domain vertical alignment (MVA) process for enhancing the quality of the TFT LCD, the polymer sustained alignment (PSA) technology is a sufficiently mature technique to achieve the mass production and enhance the optical features such as aperture ratio and contrast. In the PSA technology, photosensitive monomers are mixed with the liquid crystal during the one drop filling (ODF) process, and then an ultraviolet exposure is executed while an electric field is applied, so that the photosensitive monomers within the liquid crystal are chemically reacted. Consequently, the reacted monomers are arranged according to the pattern of the transparent conductive layer of the TFT substrate so that the LC alignment can be achieved by the photocured monomers.

For the same illuminance, a display panel with a higher transmittance can save more power for the display device. Therefore, the industry strives to increase the transmittance of the display panel to save more energy and enhance the product competitiveness. The pattern design of the transparent conductive layer of the TFT substrate is a key factor in the transmittance of the display panel. Especially with the increasingly high resolution of the panel, the pattern of the transparent conductive layer is a factor that needs to be considered to configure the panel with a higher transmittance.

**SUMMARY OF THE INVENTION**

An objective of the invention is to provide a display panel with a higher transmittance so as to enhance the product competitiveness.

To achieve the above objective, a display panel according to the invention comprises a first substrate, a second substrate disposed opposite the first substrate, and an electrode layer. The electrode layer is disposed on the first substrate and faces the second substrate, and includes a plurality of branch electrodes. The branch electrodes are disposed along a direction and spaced from each other by a first distance (T). When a light passes through the branch electrodes, a brightness distribution composed of a plurality of brightness textures and a plurality of dark textures is generated, the centers of the two adjacent bright textures are separated by a second distance (K), and K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

To achieve the above objective, a display panel according to the invention comprises a first substrate, a second substrate disposed opposite the first substrate, and an electrode layer. The electrode layer is disposed on the first substrate and faces the second substrate, and includes a plurality of branch electrodes. The branch electrodes are disposed along a direction and spaced from each other by a first distance (T). When a light passes through the branch electrodes, a brightness distribution is generated and, along the direction, has a brightness distribution curve composed of a plurality of wave peaks and a plurality of wave valleys. The two adjacent wave peaks are separated by a second distance (K), and K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

To achieve the above objective, a display device according to the invention comprises a display panel and a backlight module disposed opposite the display panel. The display panel includes a first substrate, a second substrate disposed opposite the first substrate, and an electrode layer. The electrode layer is disposed on the first substrate and faces the second substrate, and includes a plurality of branch electrodes, which are disposed along a direction and spaced from each other by a first distance (T). When a light passes through the branch electrodes, a brightness distribution composed of a plurality of brightness textures and a plurality of dark textures is generated, the centers of the two adjacent bright textures are separated by a second distance (K), and K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

To achieve the above objective, a display device according to the invention comprises a display panel and a backlight module disposed opposite the display panel. The display panel includes a first substrate, a second substrate disposed opposite the first substrate, and an electrode layer. The electrode layer is disposed on the first substrate and faces the second substrate, and includes a plurality of branch electrodes, which are disposed along a direction and spaced from each other by a first distance (T). When a light passes through the branch electrodes, a brightness distribution is generated and, along the direction, has a brightness distribution curve composed of a plurality of wave peaks and a plurality of wave valleys, the two adjacent wave peaks are separated by a second distance (K), and K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

As mentioned above, in the display panel and display device of this invention, the branch electrodes of the electrode layer are disposed along a direction and spaced from each other by a first distance (T). When a light passes through the branch electrodes, a brightness distribution is generated, the brightness distribution is composed of a plurality of brightness textures and a plurality of dark textures, and the centers of the two adjacent bright textures are separated by a second distance (K). Or, when a light passes through the branch electrodes, a brightness distribution is generated, and the brightness distribution, along the direction, has a brightness distribution curve composed of a plurality of wave peaks and wave valleys, and the two adjacent wave peaks are separated by a second distance (K). The display panel and display device can have a better transmittance when K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

**BRIEF DESCRIPTION OF THE DRAWINGS**

The invention will become more fully understood from the detailed description and accompanying drawings, which are given for illustration only, and thus are not limitative of the present invention, and wherein:

FIG. 1 is a schematic diagram of a display panel according to an embodiment of the invention;

FIG. 2A is a schematic diagram of the electrode pattern of the electrode layer of the display panel in FIG. 1;

FIG. 2B is a schematic diagram of the brightness distribution generated when the light passes through the electrode layer in FIG. 2A;

FIG. 2C is a schematic diagram showing the brightness distribution in FIG. 2B and the corresponding brightness distribution curve;

FIG. 3A is a schematic enlarged diagram of a region in FIG. 2B;

FIG. 3B is a schematic diagram of the brightness distribution curve corresponding to the brightness distribution of FIG. 3A;

FIG. 4 is a schematic diagram showing the curve in relation to the unit transparent area of a region and the second distance (the bright texture period);

FIG. 5 is a schematic diagram of the curve in relation to the optimum value of the bright texture period and the first distance under the optimum transmittance;

FIG. 6 is a schematic diagram of a display device of an embodiment of the invention; and

FIG. 7 is a schematic diagram of an original brightness distribution curve and a smoothed brightness distribution curve.

## DETAILED DESCRIPTION OF THE INVENTION

The present invention will be apparent from the following detailed description, which proceeds with reference to the accompanying drawings, wherein the same references relate to the same elements.

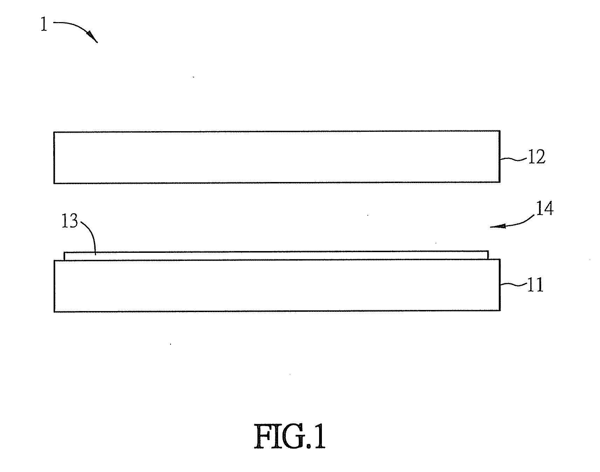

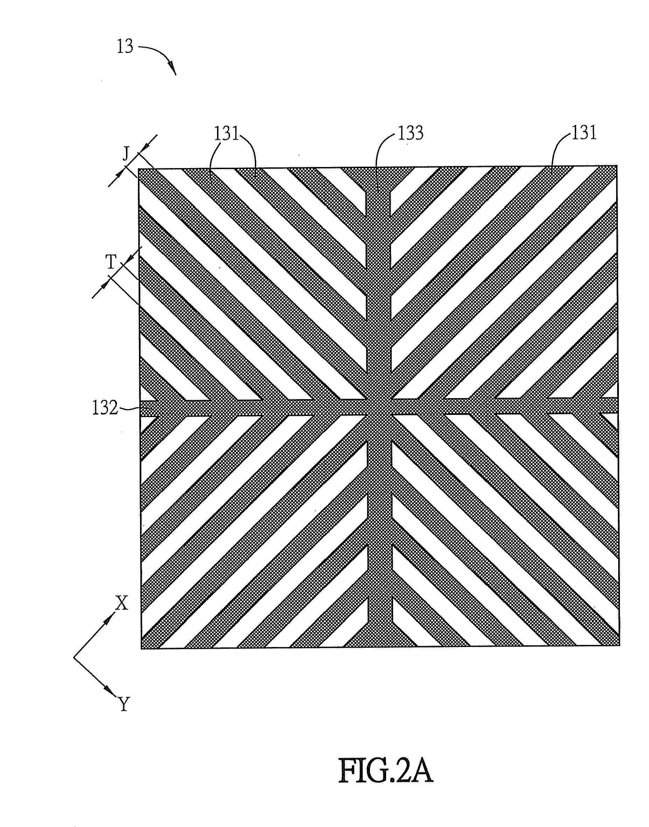

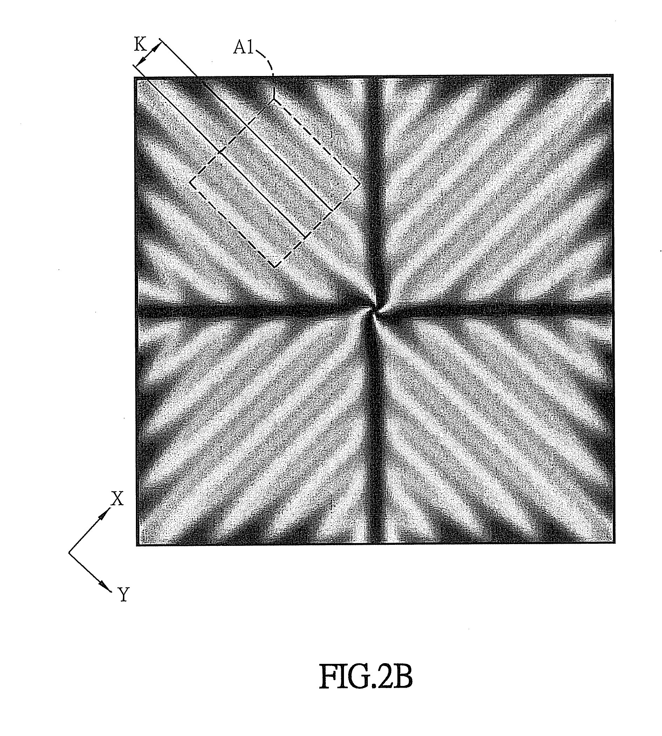

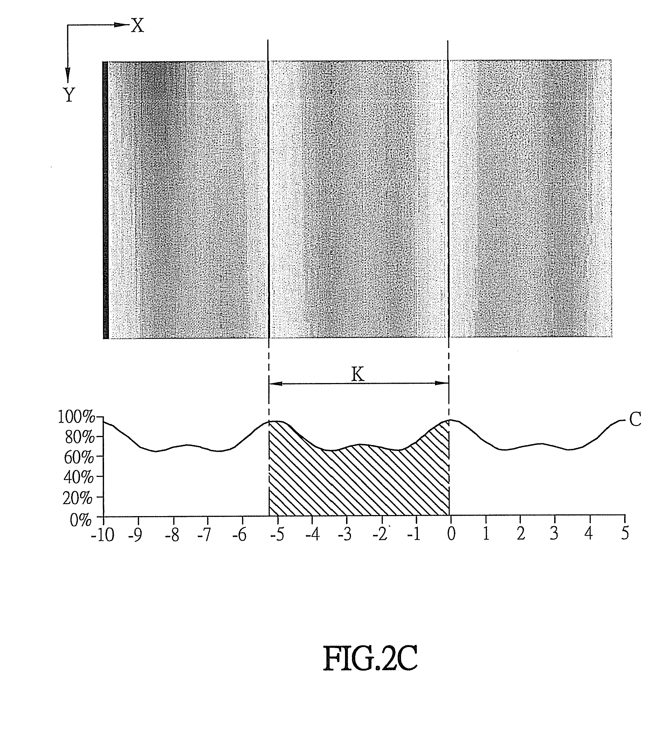

Refers to FIG. 1 and FIGS. 2A to 2C. FIG. 1 is a schematic diagram of a display panel 1 according to an embodiment of the invention, FIG. 2A is a schematic diagram of the electrode pattern of the electrode layer 13 of the display panel 1 in FIG. 1, FIG. 2B is a schematic diagram of the brightness distribution generated when the light passes through the electrode layer 13 in FIG. 2A, and FIG. 2C is a schematic diagram showing the brightness distribution in FIG. 2B and the corresponding brightness distribution curve C.

The display panel 1 of this embodiment is, for example but not limited to, an in-plane switch (IPS) liquid crystal display (LCD) panel, a fringe field switching (FFS) LCD panel, a vertical alignment mode (VA mode) LCD panel or a 3D LCD panel.

The display panel 1 includes a first substrate 11, a second substrate 12 and an electrode layer 13. The display panel 1 can further include a liquid crystal (LC) layer 14 (LC molecules are not shown). The display panel 1 can be applied to a smart phone, a tablet computer or other electronic devices for example. When the light passes through the display panel 1, the pixels (or sub-pixels) of the display panel 1 can display colors to form images.

The first substrate 11 and the second substrate 12 are disposed oppositely, and the LC layer 14 is disposed between the first and second substrates 11 and 12. Each of the first substrate 11 and the second substrate 12 can be made by transparent material, and can be a glass substrate, a quartz substrate or a plastic substrate for example. However, this invention is not limited thereto.

The display panel 1 can further include a TFT array, a color filter (CF) array and a black matrix layer (not shown). The TFT array is disposed on the first substrate 11, and the CF array or the black matrix layer can be disposed on the first substrate 11 or the second substrate 12. The TFT array, the CF array and the liquid crystal layer 14 can form a pixel array. In an embodiment, the black matrix layer and the CF array can be disposed on the second substrate 12. However, in another embodiment, the black matrix layer or the CF array can be disposed on the first substrate 11 for making a BOA (BM on array) substrate or a COA (color filter on array) substrate. Besides, the display panel 1 can further include a plurality of scan lines and a plurality of data lines (not shown). The scan lines and the data lines cross each other, and are perpendicular to each other for example to define the region of the pixel array. The pixel array includes a plurality of sub-pixels, and the sub-pixels are arranged in a matrix.

The electrode layer 13 is disposed on the first substrate 11 and faces the second substrate 12. The electrode layer 13 is a transparent conductive layer, and the material thereof is, for example but not limited to, indium-tin oxide (ITO) or indium-zinc oxide (IZO). In this embodiment, the electrode layer 13 is a pixel electrode layer of the display panel 1 and is electrically connected to the data line (not shown). Herein, FIG. 2A just shows a part of the electrode layer 13 in FIG. 1, also a pixel electrode of a sub-pixel of the display panel 1.

The electrode layer 13 includes a plurality of branch electrodes 131, a first trunk electrode 132 and a second trunk electrode 133. The first trunk electrode 132 and the second trunk electrode 133 cross each other and their joint is located at the central portion. Besides, the branch electrodes 131 are connected with the first trunk electrode 132 or the second trunk electrode 133. Herein, a part of the branch electrodes 131 is connected with the first trunk electrode 132 and another part of the branch electrodes 131 is connected with the second trunk electrode 133. An included angle between the first trunk electrode 132 and the second trunk electrode 133 can be between 80° and 100°, and an included angle between the first trunk electrode 132 and the branch electrodes 131 or between the second trunk electrode 133 and the branch electrodes 131 can be between 5° and 85°. In this embodiment, the included angle between the first trunk electrode 132 and the second trunk electrode 133 is 90°, and the included angle between the branch electrodes 131 and the first trunk electrode 132 or between the branch electrodes 131 and the second trunk electrode 133 is 45°, for example.

Since the first trunk electrode 132 and the second trunk electrode 133 of the electrode layer 13 shown in FIG. 2A cross each other and their joint is located at the central portion, the electrode layer 13 can be divided into four electrode regions by the first trunk electrode 132 and the second trunk electrode 133. Besides, the branch electrodes 131 within each of the electrode regions are arranged along a direction and spaced from each other by a first distance T (slit width). Herein, the branch electrodes 131 on the upper left side of FIG. 2A are arranged substantially parallelly along a first direction X and spaced from each other by the first distance T, and the branch electrodes 131 on the upper right side of FIG. 2A are arranged substantially parallelly along a second direction Y and spaced from each other by the first distance T (the first direction X and the second direction Y are substantially perpendicular to each other). Moreover, the branch electrodes 131 on the lower left side of FIG. 2A are arranged substantially parallelly along the second direction Y the same as the upper right side and spaced from each other by the first distance T, and the branch electrodes 131 on the lower right side of FIG. 2A are arranged substantially parallelly along the first direction X the same as the upper left side and spaced from each other by the first distance T. Besides, the jag width of the branch electrode 131 along the first or second direction X or Y is represented by J.

Due to the pattern of the electrode layer 13 in FIG. 2A, a brightness distribution composed of a plurality of bright textures and a plurality of dark textures will be correspondingly generated when the light passes through the branch electrodes 131. As shown in FIG. 2B, which shows a brightness distribution image under the condition of that the jag width J of the branch electrode 131 is equal to $3\mu m$, for the bright textures and dark textures generated when the light passes through the branch electrodes 131, the centers of the two adjacent bright textures are separated by a second distance K (or called the bright texture period K). In another embodiment, otherwise, the second distance K can be defined as the interval between the centers of the two adjacent dark textures. Moreover, when the brightness distribution is generated by the light passing through the branch electrodes 131, the brightness distribution has a brightness distribution curve C along the direction (such as the first direction X). As shown in FIG. 2C, the brightness distribution curve C is composed of a plurality of wave peaks and wave valleys, and the interval between the two adjacent wave peaks also can be defined as the second distance K (the bright texture period).

As shown in FIG. 2C, the transmittance of the electrode layer 13 can be derived from the integral of the brightness distribution curve C. In other words, the transmittance is equivalent to the area under the curve C obtained by deriving the integral of the brightness distribution curve C. However, the transmittance of the display panel 1 will be affected by the bright and dark texture distribution. In the following, in order to analyze the transmittance of the display panel 1, the transmittance of a certain region, the region A1 in FIG. 2B for example, is first analyzed. If the region A1 has the optimum transmittance, then the entire transmittance of the display panel 1 can be derived as the best.

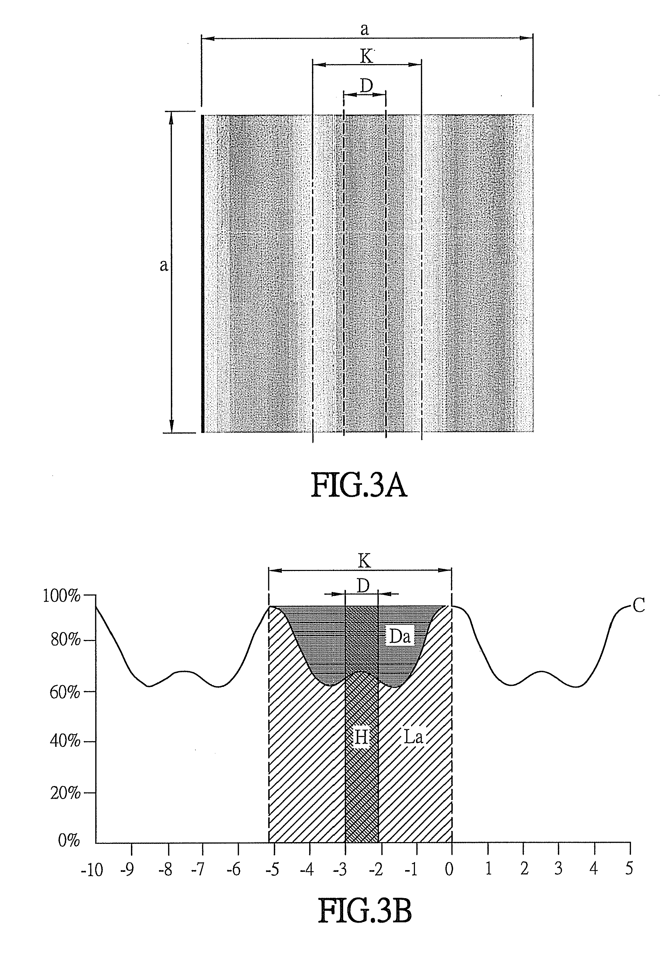

FIG. 3A is a schematic enlarged diagram of the region A1 in FIG. 2B, and FIG. 3B is a schematic diagram of the brightness distribution curve C corresponding to the brightness distribution of FIG. 3A. The brightness of the ordinate in FIG. 3B has been normalized, and for the convenient illustration, the region A1 in FIG. 3A has been rotated for about 45 degrees in relation to FIG. 2B.

As shown in FIG. 3A, the square region A1 with the side length a ($\mu m$) is taken for the analysis of the transmittance, wherein A($\mu m2$) denotes the unit transparent area of the region A1 (i.e. the unit light-emitting area, the integral area under the curve), K($\mu m$) denotes the bright texture period (about 3 periods of the brightness distribution curve C are shown in FIGS. 3A and 3B), D($\mu m$) denotes the equivalent dark texture width of a single bright texture period K, and N denotes the period number of the bright texture period K for the unit side length, i.e. N=a/K.

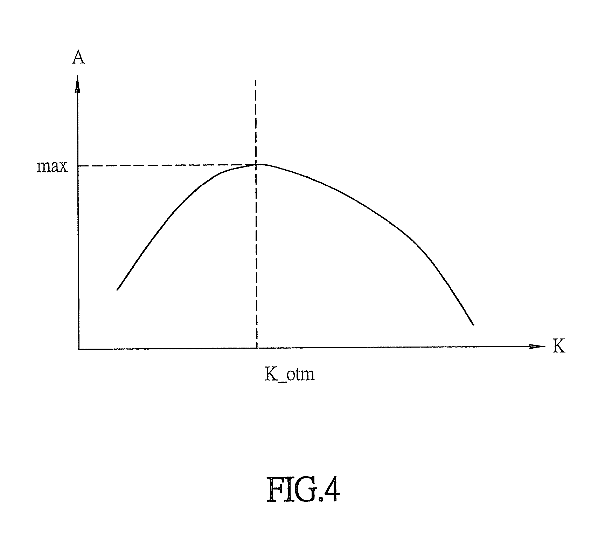

As shown in FIG. 3B, the area of the region H (the strip-like region with the width D) is made equivalent to the area of the region Da (over the curve C), so the unit transparent area A (i.e. the area under the curve C: the area of the region La) will conform to the following equation: $A = a\times(K-D)\times N = a\times(K-D)\times(a/K) = a^2\times(K-D)/K$. Moreover, since the brightness (the height of the curve C) has been normalized, $A = a^2\times(K-D)/K = a^2\times(La/K)$. Therefore, A is a function of K (A=f(k)). As shown in FIG. 4, when the second distance K is an optimum value (K otm), the unit transparent area A can have an optimum value. Accordingly, it will be a key point how to find the optimum K value.

As shown in FIG. 2A, when the interval between the branch electrodes (i.e. the first distance T) is greater, the electric field among the branch electrodes will become weaker, due to the distribution of the electric field, and the rotation of the liquid crystal will also become less. The less rotation of the liquid crystal will result in the greater equivalent dark texture width D and less transmittance of the unit area. Therefore, K and T are factors to affect the brightness distribution curve C and also the transmittance. Accordingly, the function L(x) containing the parameters K and T is used to describe their relation in this embodiment. The function L(x) is a brightness distribution curve equation (x is a position parameter) and has been normalized, as follows:

$$L(x) = a \cdot \cos(bx) + c \cdot \cos(dx) + e$$

$a = 0.044T^2 - 0.176T + 0.012K + 0.159$
$b = 11.986K^{-0.9783} = 2d$
$c = (0.0843T - 0.0667) \cdot K^{(0.047T - 0.3424)}$
$e = e_1 \cdot K^2 + e_2 \cdot K + e_3$
$e_1 = -8.080 \times 10^{-4} T^2 + 5.100 \times 10^{-3} T - 1.275 \times 10^{-2}$
$e_2 = 8.440 \times 10^{-3}T^2 - 5.012 \times 10^{-2}T + 1.312 \times 10^{-1}$
$e_3 = -5.660 \times 10^{-2} T^2 + 1.669 \times 10^{-1} T + 5.886 \times 10^{-1}$

Then, a length integral of a bright texture period K is performed to the above function L(x), and the result is multiplied by 1/K to obtain the brightness distribution integral function f(K) under the unit bright texture period K, i.e. the relation function between the unit brightness (Lu) and the bright texture period K: Lu=f(K). Then, the differential of f(K) is derived and then made equal to zero to obtain the extreme value, as follows:

$$\frac{d}{dK}\left[\frac{\int_0^K L(x)dx}{K}\right] = 0 \qquad\qquad L(x) = a \cdot \cos(bx) + c \cdot \cos(dx) + e$$

Since K=h(T) is really complicated, it is not directly solved in this invention but solved with a numerical solution. In the numerical solution, a certain value T is applied to the above function L(x), and a length integral of a bright texture period K is performed to the function L(x), and then the result is multiplied by 1/K (because of the integral of the length K, the result needs to be multiplied by 1/K to obtain the brightness distribution integral under the unit bright texture period) and normalized. Thereby, the relation function Lu=f(K) between the unit brightness Lu and the bright texture period K under the value T can be derived as follows:

$$Lu = \frac{\int_0^K L(x)dx}{K} \qquad\qquad L(x) = a \cdot \cos(bx) + c \cdot \cos(dx) + e$$

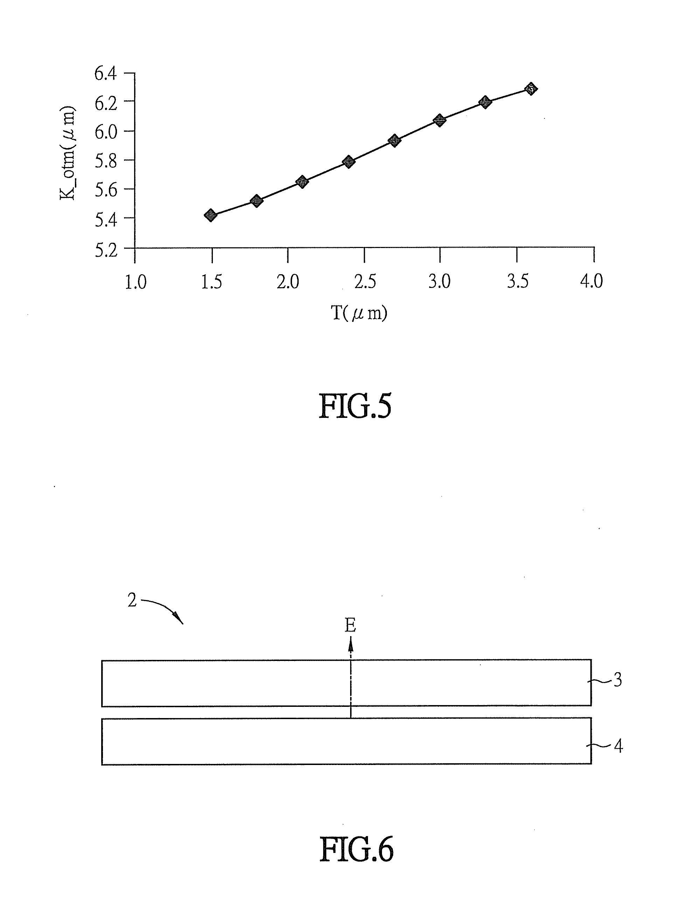

Then, find the optimum value (K_otm) corresponding to the maximum value of f(K) under the value T. Accordingly, the above computation is repeated by different values T so that the corresponding optimum values (K_otm) can be obtained with the different values T. Hence, by using different values T to obtain the corresponding optimum values (K_otm), the relation equation K=h(T), under the optimum transmittance, between the first distance T and the optimum values (K_otm) can be obtained. For example, when T=3μm, f(K)=-0.4731K²+5.7422K+57.621, and then the differential of f(K) is derived and made equal to zero to obtain the extreme value so that the optimum value of K can be derived as 6.07μm, when T=3.5μm, f(K)=-0.4837K²+6.0485K+47.184, and then the differential of f(K) is derived and made equal to zero to obtain the extreme value so that the optimum value of K can be derived as 6.25μm, etc. Therefore, as shown in FIG. 5, the equation K=h(T) can be obtained as follows:

$$K = -0.06685 \times T^3 + 0.50427 \times T^2 - 0.78456 \times T + 5.68779, \qquad \text{(equation 1)}$$

wherein $1 \leqq T \leqq 10$, and T and K in unit of $\mu$m.

In other words, when the relation between K and T satisfy the equation (1), the region A1 can have a better transmittance and the display panel 1 can thus have a better transmittance. However, in consideration of the process variation, the display panel 1 can have a better transmittance in this embodiment when K and T satisfy the following inequality:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

Favorably, the display panel 1 can have a much better transmittance when K and T satisfy the following inequality:

$$(-0.06685 \times T^3 + 0.50427 \times T^2 - 0.78456 \times T + 5.68779) - 0.3 \leq K$$
$$\leq (-0.06685 \times T^3 + 0.50427 \times T^2 - 0.78456 \times T + 5.68779) + 0.3$$

FIG. 6 is a schematic diagram of a display device 2 of an embodiment of the invention.

As shown in FIG. 6, the display device 2 includes a display panel 3 and a backlight module 4, and the display panel 3 and the backlight module 4 are disposed oppositely. The display panel 3 can have all the features of the above display panel 1 and its variations, so its description is omitted here for conciseness. When the backlight module 4 emits the light E passing through the display panel 3, the pixels of the display panel 3 can display colors to form images.

To be noted, in order to obtain the brightness distribution curve C of the branch electrodes 131, the optical microscopy (OM) can be used to shoot the bright and dark textures generated when the light passes through the electrode layer 13 (at this time, the display panel is on the full-bright gray level state). The magnification of the optical microscopy is 20x for example, and the definition of the picture is 640x480 for example. One thing needs to be noticed is that the crisscross dark texture at the central portion of the image (generated by the first and second trunk electrodes 132 and 133) and the neighboring dark texture needs to be avoided during the image shooting. Then, the gray level of each position along the direction which the branch electrodes 131 are substantially parallelly disposed according to (i.e. the first direction X) is converted into data and therefore the raw data of the brightness distribution along the direction can be obtained.

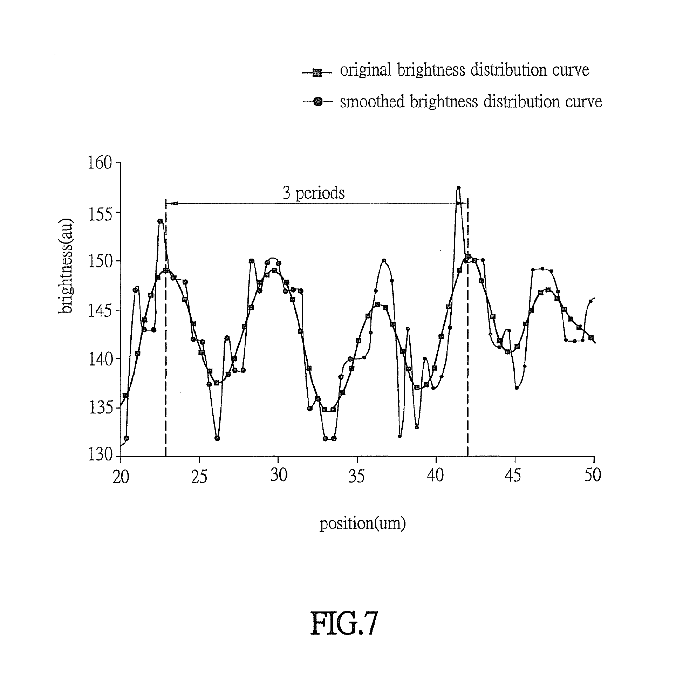

However, due to the shooting problem of the optical microscopy (e.g. the definition problem), the bright and dark textures may not be very clear and the raw data of the brightness distribution will contain much noise. Therefore, the raw data needs to be processed by the smoothing implemented by a software (e.g. OriginPro7.5) to obtain the smoothed brightness distribution curve as shown in FIG. 7. Moreover, for obtaining the more objective bright texture period value, the data of n periods (n is an integer of $1 \sim 10$ for example) can be captured and averaged to obtain the average of the bright texture period, and the average can be used as the above-mentioned bright texture period K. For example, 3 periods in FIG. 7 are taken, and then 3K=41.9255 -23.059=18.8665, K=6.2883$\mu$m.

Summarily, in the display panel and display device of this invention, the branch electrodes of the electrode layer are disposed along a direction and spaced from each other by a first distance (T). When a light passes through the branch electrodes, a brightness distribution is generated, the brightness distribution is composed of a plurality of brightness textures and a plurality of dark textures, and the centers of the two adjacent bright textures are separated by a second distance (K). Or, when a light passes through the branch electrodes, a brightness distribution is generated, and the brightness distribution, along the direction, has a brightness distribution curve composed of a plurality of wave peaks and wave valleys, and the two adjacent wave peaks are separated by a second distance (K). The display panel and display device can have a better transmittance when K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

, $1 \leq T \leq 10$, and T and K in unit of micrometer.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

**Claims**

1.  A display panel, comprising:

    a first substrate and a second substrate disposed opposite the first substrate; and
    an electrode layer disposed on the first substrate and facing the second substrate, and including a plurality of branch electrodes, which are disposed along a direction and spaced from each other by a first distance (T), wherein when a light passes through the branch electrodes, a brightness distribution composed of a plurality of brightness textures and a plurality of dark textures is generated, the centers of the two adjacent bright textures are separated by a second distance (K), and K and T satisfy the following equation:

$$(-0.06685 \times T^3 + 0.50427 \times T^2 - 0.78456 \times T + 5.68779) - 0.5 \leq K$$
$$\leq (-0.06685 \times T^3 + 0.50427 \times T^2 - 0.78456 \times T + 5.68779) + 0.5$$

    , $1 \leq T \leq 10$, and T and K in unit of micrometer.

2.  The display panel as recited in claim 1, wherein K and T further satisfy the following equation:

$$(-0.06685 \times T^3 + 0.50427 \times T^2 - 0.78456 \times T + 5.68779) - 0.3 \leq K$$
$$\leq (-0.06685 \times T^3 + 0.50427 \times T^2 - 0.78456 \times T + 5.68779) + 0.3$$

3.  The display panel as recited in claim 1, wherein the electrode layer further includes a first trunk electrode and a second trunk electrode, the first trunk electrode and the second trunk electrode cross each other, and the branch electrodes are connected with the first trunk electrode or the second trunk electrode.

4.  The display panel as recited in claim 3, wherein an included angle between the first trunk electrode and the branch electrodes or between the second trunk electrode and the branch electrodes is between 5° and 85°.

1

12

14

13

11

FIG.1

FIG.2A

FIG.2B

FIG.2C

FIG.3A

FIG.3B

FIG.4

FIG.5

FIG.6

FIG.7

Europäisches
Patentamt

European
Patent Office

Office européen
des brevets

**EUROPEAN SEARCH REPORT**

Application Number

EP 14 18 3590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 246 733 A1 (SHARP KK [JP]) 3 November 2010 (2010-11-03) * paragraphs [0040] - [0064]; figures 1-3,6 * | 1-4 | INV. G02F1/1343 ADD. G02F1/1337 |
| A | US 2012/280236 A1 (KIM HYUN-CHUL [KR]) 8 November 2012 (2012-11-08) * abstract; figures 2,32-35 * | 1-4 | |
| A | US 2014/016073 A1 (YAO XIAOHUI [CN] ET AL) 16 January 2014 (2014-01-16) * abstract; figures 1-10 * | 1-4 | |

TECHNICAL FIELDS
SEARCHED      (IPC)

G02F

The present search report has been drawn up for all claims

| Place of search | Date of completion of the search | Examiner |
|---|---|---|
| Munich | 27 November 2014 | Ammerlahn, Dirk |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

**ANNEX TO THE EUROPEAN SEARCH REPORT
ON EUROPEAN PATENT APPLICATION NO.**

EP 14 18 3590

This annex lists the patent family members relating to the patent documents cited in  the above-mentioned European search report.
The members are as contained in the European Patent Office EDP file on
The European Patent Office is in no way liable for these particulars which are merely given for the purpose of information.

27-11-2014

| Patent document cited in search report | | Publication date | Patent family member(s) | | Publication date |
|---|---|---|---|---|---|
| EP 2246733 | A1 | 03-11-2010 | CN | 101939696 A | 05-01-2011 |
| | | | EP | 2246733 A1 | 03-11-2010 |
| | | | US | 2011025970 A1 | 03-02-2011 |
| | | | WO | 2009098747 A1 | 13-08-2009 |
| US 2012280236 | A1 | 08-11-2012 | JP | 2012234140 A | 29-11-2012 |
| | | | KR | 20120124527 A | 14-11-2012 |
| | | | US | 2012280236 A1 | 08-11-2012 |
| US 2014016073 | A1 | 16-01-2014 | NONE | | |

EPO FORM P0459

For more details about this annex : see Official Journal of the European Patent Office, No. 12/82